# EUROPEAN PATENT SPECIFICATION

(11) **EP 1 565 051 B1**
(45) Date of publication and mention of the grant of the patent: **17.10.2007**
(21) Application number: 03773003.3
(22) Date of filing: 13.11.2003
(51) Int. Cl.: A01G 1/00

(54) **MOTORDRIVEN TOOL SUCH AS A POLE HEDGE TRIMMER WITH A LOCKING MECHANISM FOR THE TURNABLE CUTTING UNIT**
MOTORGETRIEBENES WERKZEUG WIE EINE STANGENHECKENSCHERE MIT EINEM VERRIEGELUNGSMECHANISMUS F R DIE DREHBARE SCHNEIDEINHEIT
OUTIL MOTORISE TEL QU'UNE TAILLEUSE DE HAIE A PERCHE A MECANISME DE VERROUILLAGE POUR L'UNITE DE COUPE ROTATIVE

(30) Priority: 19.11.2002 SE 0203436
(43) Date of publication of application: 24.08.2005
(73) Proprietor: Husqvarna AB, 561 82 Huskvarna (SE)
(72) Inventor: DÖRAGRIP, Gustaf, S-553 23 Jönköping (SE); DAHLBERG, Göran, S-563 91 Gränna (SE)
(74) Representative: Hyltner, Jan-Olof
(86) International application number: PCT/SE2003/001770
(87) International publication number: WO 2004/045269

(56) References cited:
- EP-A2- 0 834 248
- EP-A2- 0 879 553
- US-A- 4 651 420

## Description

This invention relates to a motor driven tool such as a pole hedge trimmer, a pole saw or the like comprising a drive unit that via a haft tube is connected to a cutting unit which is turnably secured to the shaft tube having the features of claim 1.

Hedge trimmers and saws of the type mentioned above are provided with shaft tubes of different lengths and are used for trimming small as well as large trees, hedges, bushes and the like. These tools, that are provided with a handle having necessary control means for operating the drive unit and a further handle placed at the shaft tube, make it possible to find a comfortable working position when trimming bushes and trees and hedges since i.a. the cutting unit can be turned with respect to the shaft tube. This means that the operator before the work starts can put the cutting unit in a suitable angular position in order to adapt the severing or cutting means to the working position of the operator. However, the tools of today are designed such that the adjustment means are placed in close vicinity of the cutting unit. This means that adjustment operation is complicated since the operator is forced to leave hold of one or both handles in order to reach the locking means. Then the cutting unit has to be turned by means of a special handle before it is locked in its new position. The locking means and the special handle are usually also placed such that there is a risk that the operator gets injured by the cutting or severing parts of the cutting unit.

It is also previously known, see US 4651420, to provide a pole cutter with an angle adjustment means for the cutter unit. The cutter unit is driven by the reciprocating motion of a Bowden cable and the adjustment means comprises a pivotable handle that via a rod is connected to the cutter unit support. The handle can be locked in different position by means of a teethed latch. This arrangement is however very poor and is not acceptable from a safety point of view since the latch can easily disengage from the handle which would cause the cutter unit to move uncontrolled. Moreover to change the angular position of the cutter unit the operator has to turn off the engine and move one of his hands from the grip to the latch to choose a new position for the latch before starting the engine again.

The purpose of this invention is to create an arrangement simplifying the adjustment procedure whereby the operator can turn the cutting unit with respect to the shaft tube mainly with preserved grip about the handle parts. This is achieved by means of a device having the characteristics mentioned in the claims.

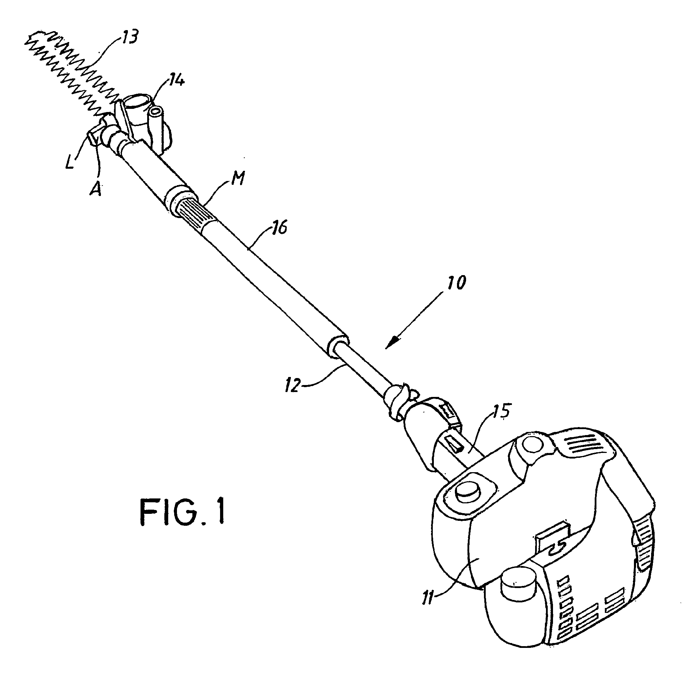

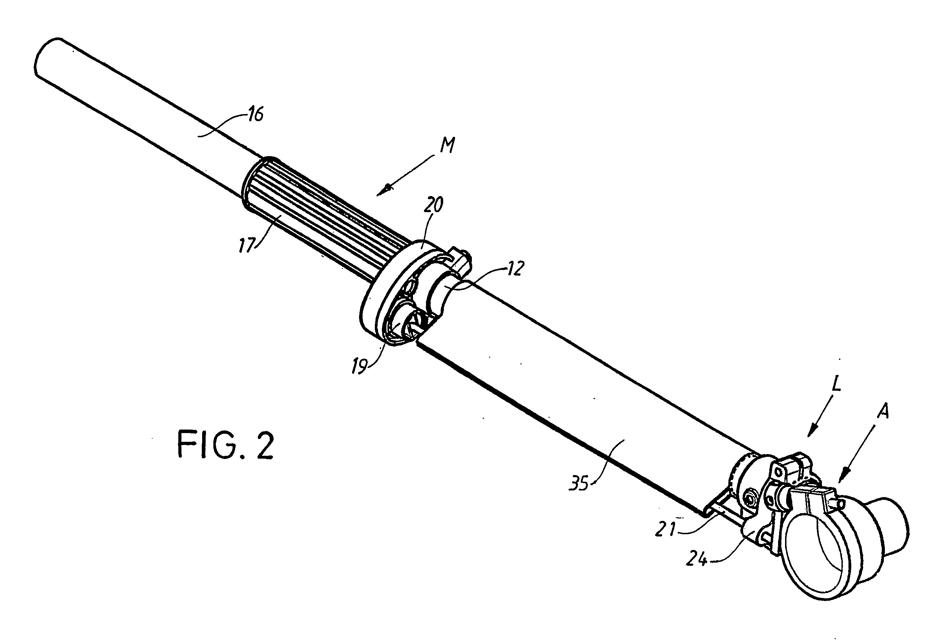

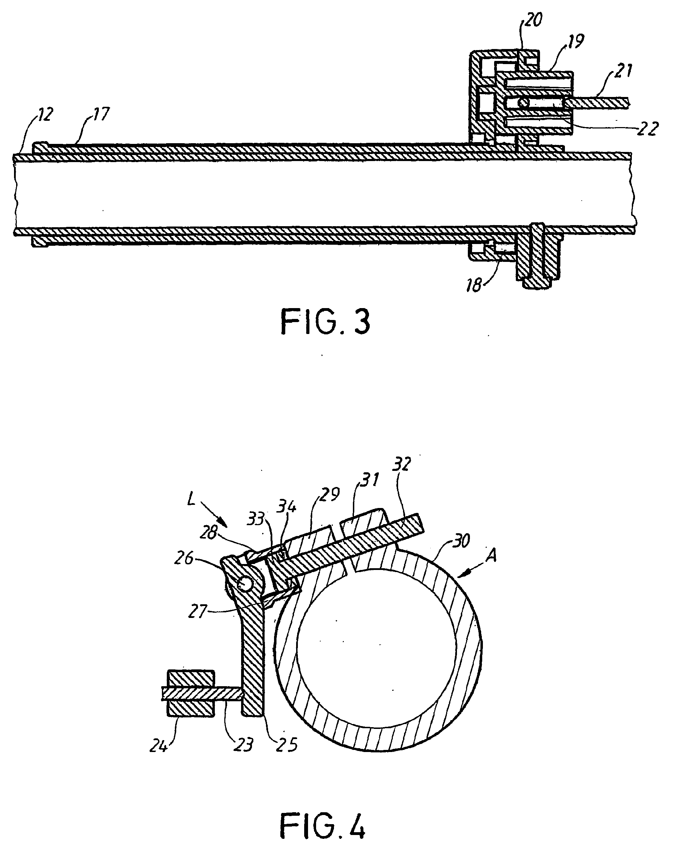

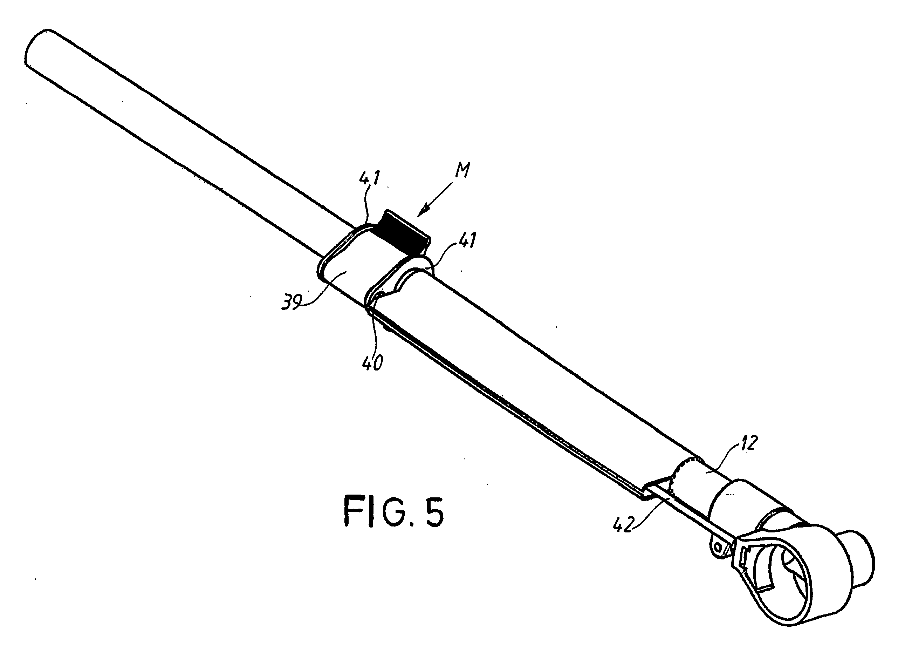

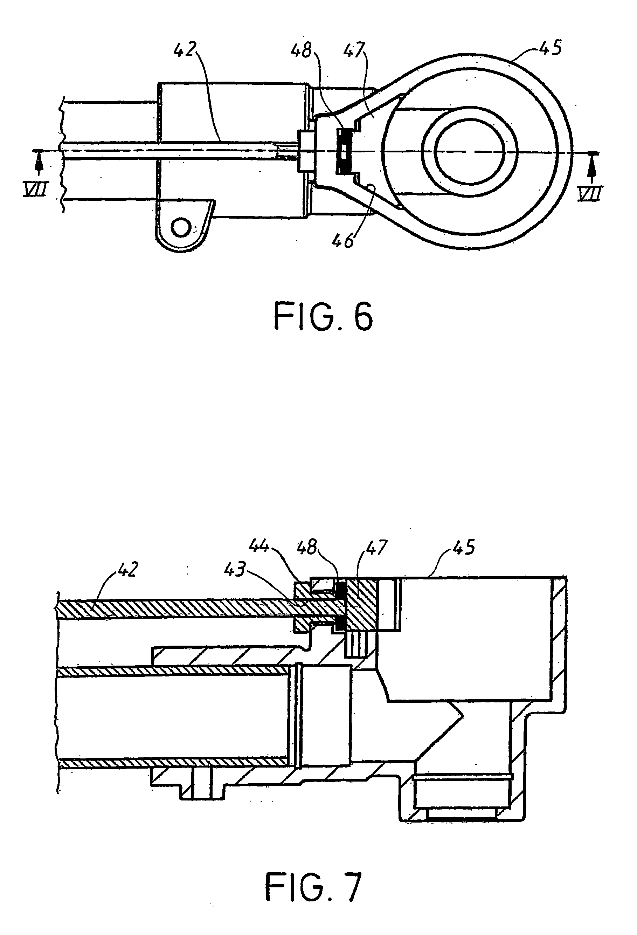

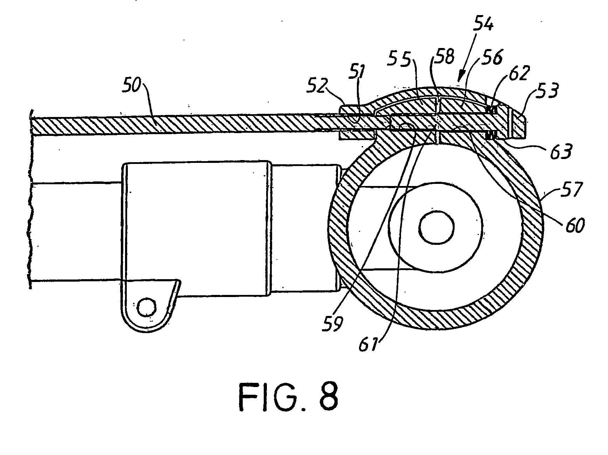

Several embodiments of the invention will now be described with reference to the accompanying drawings on which Fig. 1 is a perspective view of a pole hedge trimmer of the type in question, Fig. 2 is a perspective view of a first embodiment of the adjusting arrangement, Fig. 3 is a section through a part of the arrangement shown in Fig. 2, Fig. 4 is a section through another part of the arrangement shown in Fig 2, Fig. 5 is a perspective view of an embodiment of the adjustment arrangement being not a part of the invention, Fig. 6 is a side view of the locking arrangement shown in Fig. 5, Fig. 7 is a section on the line VII-VII in Fig. 6 whereas Fig. 8 is a further embodiment of the locking mechanism.

As appears form Fig. 1 the pole hedge cutter comprises a drive unit 11 which via a shaft tube 12 is connected to a cutting unit 13. The drive unit 11 can be of any type such as an internal combustion engine or an electric motor whose output shaft is connected to a drive shaft, not shown, that is placed within the shaft tube and that via a gear 14 is connected to the cutting unit. The shaft tube 12 has an inner handle 15 that is provided with throttle control means and additional control means for the drive unit and an outer handle 16 designed as a sleeve of grip friendly material. The cutting unit 13 in a conventional manner is provided with stationary, comb shaped knive protectors cooperating with corresponding knives arranged to move forwards/backwards and being driven by the drive shaft via the gear 14. The cutting unit 13 is by means of a turnable connection A supported by the shaft tube 12. The turnable connection comprises a braking and locking means L that can be released by means of a control means M arranged close to the outer handle.

According to the embodiment shown in Fig. 2 the control means M comprises a turnable handle designed as a sleeve 17 and arranged outside the shaft tube 12 close to the outer handle 16. The sleeve 17 that preferably is provided with an outer shell of grip friendly material is at one of its end provided with an outer gear rim 18, see Fig. 3, cooperating with a tube socket 19 provided with a gear rim engaging the gear rim 18. The tube socket 19 is turnably supported in a gear box 20 surrounding the gear mechanism. The tube socket 19 drives a turning rod 21 having one end which is wave shaped and slideably arranged in a pocket of the tube socket 19 such that the turning rod follows the turning motion of the gear wheel at the same time as it has the possibility to move in the axial direction. The other end 23 of the turning rod is threaded and inserted into a lug 24 serving as a nut at the turnable connection A. The end part of the turning rod that extends from the lug is arranged to act on a lever 25 which is a part of the locking mechanism L. The lever 25 is supported for turning motion about a stub shaft 26 and has an abutment surface 27 resting against one end of a sleeve 28 whose other end rests against a shoulder 29 which is a part of a clamp connection arranged at the bearing housing and comprising a clamping ring 30 surrounding a turning shaft, not shown, of the cutting unit. The clamping ring 30 also comprises a shoulder 31 in which a screw 32 is threaded the screw being freely movable in a through hole in the shoulder 29 and being provided with a screw head 33 which is placed in the sleeve 28. Between the screw head 33 and the shoulder 29 there are several spring washers 34. In order to prevent branches from getting entangled between the shaft tube 12 and the turning rod 21 it is covered by a protecting shell 35 which is secured to the shaft tube.

The arrangement shown in Fig. 2-4 operates in the following manner. When the operator desires to change the position of the cutting unit the sleeve 17 is turned which means that the tube socket 19 follows the motion and acts on the turning rod such that it by means of its threaded engagement with the lug 24 is moved axially to the left in Fig. 4 and hence influences the lever 25. This means that the lever is turned clockwise about the stub shaft 26 until the abutting surface 27 does not abut the sleeve 28 any longer which means that the shoulder 29 moves to the left in the figure such that the clamp ring 30 looses its grip about the turning shaft of the cutting unit. Because of the force created by the screw 32 and the spring washers 34 on the shoulder 29 a certain grip about the turning shaft is maintained. By pressing the cutting unit 13 against the ground or some other kind of counter acting object, thereby overcoming the braking moment that the spring washers create, the angle of the cutting unit with respect to the shaft tube 12 can now be changed. Then the cutting unit 13 is locked by turning the sleeve 17 in the opposite direction which means that the lever 25 will press the sleeve 28 against the shoulder 29 such that the distance between the two shoulders 29, 31 decreases thereby locking the clamping ring 30 about the turning shaft of the cutting unit.

At the embodiment shown in Fig. 5-7 the control means M comprises an arm 39 which by means of a shaft 40 is turnably supported between two side walls 41 arranged on the shaft tube 12. The shaft 40 supports a pocket, not shown, which in the same manner as has been mentioned at the embodiments described above encloses one end of a turning rod 42 such that it can be moved axially at the same time as it is turned. The other end of the turning rod is threaded and inserted into a central, tube shaped, threaded opening 43 arranged in a screw 44 which is threaded into a bearing housing 45 surrounding the turning shaft, not shown, of the cutting unit. The bearing housing 45 is provided with a recess 46 directed towards the turning shaft and comprising a brake pad 47 movable in the radial direction. Between the brake pad 47 and the inner end of the screw 44 there are several spring washers 48 having a central opening in which the turning rod 42 is freely movable and arranged such that it abuts the brake pad 47.

The arrangement shown in Fig. 5-7 operates in the following manner. In order to adjust the angle of the cutting unit 13 with respect to the shaft tube 12 the arm 39 is acted on whereby the turning motion is transferred to the turning rod 42. This means that the turning rod by means of the engagement with the screw 44, which is stationary arranged in the brake drum, is moved axially towards the left in Fig. 7 such that the grip from the brake pad 47 on the cutting unit turning shaft, which is inserted in the surrounding bearing housing 45, ceases. Because of the spring force created by the spring washers on the brake pad 47 a certain braking moment on the turning shaft of the cutting unit is retained. This means that the operator can then push the cutting unit against a suitable counter acting object for instance the ground, in order to achieve a force by means of which the cutting unit can be turned with respect to the shaft tube. In order to lock the cutting unit in the new position the arm 39 is moved back to its original position which means that the turning rod will move towards the right in Fig. 6 and thereby push the brake pad 47 against the turning shaft. In order to set a suitable braking moment when the locking function is not activated the screw 44 can be turned such that the force created by the spring washers 48 against the brake pad 47 is changed in a suitable way.

The embodiment of the locking mechanism L shown in Fig. 8, in the same manner as in the embodiments previously described, comprise a turning rod 50 which is influenced by a control means the end of the turning rod extending through a threaded through opening 51 of one of two legs 52, 53 of a U-shaped clamp shoe 54. The clamp shoe 57 partly surrounds two shoulders 55, 56 of a clamp ring 57 arranged on a bearing housing the clamp ring surrounding the turning shaft, not shown, of the cutting unit. The clamp shoe 57 has a slot 58 separating the two shoulders 55, 56 which are each provided with a through hole 59, 60 that are coaxial with the hole 51. The hole 59 is threaded and supports a screw 61 having one end abutting the end of the turning rod 50 and being partly threaded into the hole 59 whereas the screw runs freely through the hole 60. Further there are several spring washers 62 surrounding the screw 61 and placed between the shoulder 56 and the head 63 of the screw 61.

The locking mechanism described in Fig. 8, which might be used together with anyone of the control means M being previously described, operates in the following manner. When the locking function is to be loosed the control means is actuated such that the turning rod 59 becomes a turning motion which means that the turning rod because of the threaded engagement with the leg 52 of the clamp shoe 54 is moved towards the left in Fig. 8 with respect to the clamp shoe 54 such that the end of the turning rod 50 which is freely movable in the opening 59 disengages the end of the screw 61. This means that the force which is transferred from the clamp shoe 54 via the leg 53 to the screw head 63 ceases such that the locking effect disappears at the same time as a certain grip remains between the turning shaft of the cutting unit and the bearing housing because of the clamping force created by the spring washers 62. The operator can then change the angle of the cutting unit 13 with respect to the shaft tube in a manner described previously after which the control means is influenced to again lock the cutting unit in the new position.

It should in this connection be pointed out that the combination of the control means M and the locking means L which has been shown in the embodiments is solely illustrative and that it of course is possible to use them in any combination. It should also be stressed that even if the embodiments mentioned above relate to hedge trimmers the described arrangements are applicable also for similar types of tools such as for pole saws (i.e. saws on which a guide plate with a saw chain is arranged at the upper part of the shaft tube and a drive unit is arranged at the lower part of the shaft tube) clearing saws and trimmers having cutting units with saw blades and cutting filaments.

## Claims

1. Motor driven tool such as a pole hedge trimmer, a pole saw or the like comprising a drive unit (11) that via a shaft tube (12) enclosing a drive shaft and being provided with a handle (16), is connected to a cutting unit (13) which is turnably secured to the shaft tube, the turnable connection is under the influence of a locking mechanism (L) which from the normal working position of the operator can be released by means of a control means (M) arranged at a distance from the locking mechanism (L) and close to the handle (16), the locking mechanism (L) is connected to a rod (21, 42, 50) which is mainly parallel to the shaft tube (12), **characterized in that** the control means (M) comprises a turnable sleeve (17) surrounding the shaft tube and being directly or indirectly connected to the rod (21, 42, 50) in such a way that a turning movement is transferred from the control means (M) to a locking means being a part of the locking mechanism (L) possibly via a gear transmission.

2. Tool according to claim 1, **characterized in that** the locking mechanism (L) comprises a brake mechanism which by means of a force creating means (34, 48, 62) in the non locked position of the cutting unit (13) creates a braking force against outer forces that influences the cutting unit.

3. Tool according to any of the preceding claims **characterized in that** the locking mechanism (L) comprises a clamp means.

4. Tool according to claim 3, **characterized in that** the clamp means completely or partly surrounds a shaft around which the cutting unit is turnable.

5. Tool according to claim 1, **characterized in that** the clamp means comprises a clamp ring (30) having two shoulders (29, 31) or the like being under the influence of a spring loaded screw connection (32) one of the shoulders (29) being movable towards the other shoulder (31) by means of a lever (25) arranged to be acted on by the control means (M) via a turning rod (23).

6. Tool according to claim 1, **characterized in that** the clamp means comprises a bearing housing (45) taking up said shaft and enclosing a brake pad (47) which is acted on by a turning rod (42) in order to lock the shaft in the bearing housing the brake pad being under the influence of a spring means (48).

7. Tool according to claim 5, **characterized in that** the spring characteristics of the spring means (48) is adjustable by means of a sleeve (44) which is threaded into the bearing housing (45) and having a through, threaded opening (43) through which the turning rod (42) extends and abuts the brake pad (47).

8. Tool according to claim 4, **characterized in that** the clamp means comprises a clamp ring (57) enclosing the shaft and having two shoulders (55, 56) which are partly surrounded by a U-shaped clamp shoe (54) having one leg (52) with a through opening (51) through which a threaded turning rod (50) is inserted the opening being coaxial with a through opening (59, 60) in each shoulder (55, 56) and receiving a spring loaded screw (60) arranged to be influenced by the other leg (53) the end of the screw (60) normally abutting the end of the turning rod (50).

## Patentansprüche

1. Motorbetriebenes Werkzeug wie eine Stangenheckenschere, einer Stangensäge oder dergleichen, welches eine Antriebseinheit (11), die über ein Wellenrohr (12) eine Antriebswelle umschließt und mit einem Handgriff (16) versehen ist, wobei das Werkzeug an eine Schneideinheit (13) angeschlossen ist, die drehbar an dem Wellenrohr befestigt ist, wobei die drehbare Verbindung unter dem Wirkeinfluss einer Verriegelungsmechanik (L) steht, die aus einer normalen Arbeitsposition des Benutzers mittels einer Steuereinrichtung (M) gelöst werden kann, welche in einem Abstand von der Verriegelungsmechanik (L) und nahe beim Handgriff (16) angeordnet ist, wobei die Verriegelungsmechanik (L) mit einer Stange (21, 42, 50) verbunden ist, die hauptsächlich parallel zu dem Wellenrohr (12) verläuft, **dadurch gekennzeichnet, dass** die Steuereinrichtung (M) eine drehbare Hülse (17) umfasst, welche das Wellenrohr umgibt und dabei direkt oder indirekt mit der Stange (21, 42, 50) in der Weise verbunden ist, dass eine Drehbewegung von der Steuereinrichtung (M) - ggf. über einen Antriebsstrang - auf eine Verriegelungseinrichtung übertragen wird, welche Teil der Verriegelungsmechanik (L) ist.

2. Werkzeug nach Anspruch 1, **dadurch gekennzeichnet, dass** die Verriegelungsmechanik (L) eine Bremsmechanik aufweist, mittels derer eine Einrichtung (34, 48, 62) zum Erzeugen einer Kraft bei unverriegelter Stellung der Schneideinheit (13) eine Bremskraft entgegen Außenkräften erzeugt, welche auf die Schneideinheit einwirkt.

3. Werkzeug nach einem der vorhergehenden Ansprüche, **dadurch gekennzeichnet, dass** die Verriegelungsmechanik (L) eine Spanneinrichtung aufweist.

4. Werkzeug nach Anspruch 3, **dadurch gekennzeichnet, dass** die Spanneinrichtung eine Welle ganz oder teilweise umgibt, um welche die Schneideinheit drehbar ist.

5. Werkzeug nach Anspruch 1, **dadurch gekennzeichnet, dass** die Spanneinrichtung einen Spannring (30) mit zwei Schultern (29, 31) oder dergleichen aufweist, auf die eine mittels einer Feder gespannte Schraubverbindung (32) einer der Schultern (29) einwirkt, welche dabei zu der anderen Schulter (31) hin mittels eines Hebels (25) bewegbar ist, der so angeordnet ist, dass er über eine drehbare Stange (23) von der Steuereinrichtung (M) beaufschlagbar ist.

6. Werkzeug nach Anspruch 1, **dadurch gekennzeichnet, dass** die Spanneinrichtung ein Lagergehäuse (45) aufweist, welches die Welle aufnimmt und einen Bremsbelag (47) umschließt, der von einer drehbaren Stange (42) so beaufschlagbar ist, dass er die Welle in dem Lagergehäuse sichert, wobei der Bremsbelag unter der Einwirkung einer Federeinrichtung (48) steht.

7. Werkzeug nach Anspruch 5, **dadurch gekennzeichnet, dass** die Federkennlinie der Federeinrichtung (48) mittels einer Hülse (44) einstellbar ist, die in das Lagergehäuse (45) eingeschraubt ist und eine durchgehende Gewindeöffnung (43) aufweist, durch welche sich die drehbare Stange (42) erstreckt und gegen den Bremsbelag (47) anstößt.

8. Werkzeug nach Anspruch 4, **dadurch gekennzeichnet, dass** die Spanneinrichtung einen Spannring (57) aufweist, welcher die Welle umschließt und zwei Schultern (55, 56) aufweist, die teilweise von einem U-förmigen Spannschuh (54) mit einem Schenkel (52) mit einer durchgehenden Öffnung (51) umgeben sind, durch welche eine drehbare Stange (50) mit Gewinde eingeführt ist, wobei die Öffnung koaxial zu einer durchgehenden Öffnung (59, 60) in jeder Schulter (55, 56) verläuft und eine mittels einer Feder gespannte Schraube (60) aufnimmt, die so angeordnet ist, dass auf sie der andere Schenkel (53) wirkt, wobei das Ende der Schraube (60) normalerweise gegen das Ende der drehbaren Stange (50) anstößt.

## Revendications

1. Outil entraîné par moteur tel qu'un taille-haie sur perche, une scie sur perche ou analogue, comprenant une unité d'entraînement (11) qui est reliée, par l'intermédiaire d'un tube d'arbre (12) renfermant un arbre d'entraînement et muni d'une poignée (16), à une unité de coupe (13), qui est fixée au tube d'arbre avec possibilité de rotation, la jonction tournante étant sous l'influence d'un mécanisme de verrouillage (L) qui peut être déverrouillé de la position de travail normale de l'utilisateur à l'aide d'un moyen de commande (M) agencé à distance du mécanisme de verrouillage (L) et près de la poignée (16), et le mécanisme de verrouillage (L) étant relié à une tringle (21, 42, 50) qui est essentiellement parallèle au tube d'arbre (12), **caractérisé en ce que** le moyen de commande (M) comprend un manchon tournant (17) qui entoure le tube d'arbre et qui est relié directement ou indirectement à la tringle (21, 42, 50) de telle manière qu'un mouvement de rotation soit transmis du moyen de commande (M) à un moyen de verrouillage qui fait partie du mécanisme de verrouillage (L), éventuellement par l'intermédiaire d'une transmission à engrenage.

2. Outil selon la revendication 1, **caractérisé en ce que** le mécanisme de verrouillage (L) comprend un mécanisme de frein qui, dans la position non verrouillée de l'unité de coupe (13),exerce à l'aide d'un moyen générateur de force (34, 48, 62), une force de freinage à l'encontre de forces extérieures qui influencent l'unité de coupe.

3. Outil selon une quelconque des revendications précédentes, **caractérisé en ce que** le mécanisme de verrouillage (L) comprend un moyen de serrage.

4. Outil selon la revendication 3, **caractérisé en ce que** le moyen de serrage entoure entièrement ou partiellement un arbre autour duquel l'unité de coupe peut tourner.

5. Outil selon la revendication 1, **caractérisé en ce que** le moyen de serrage comprend une bague de serrage (30) présentant deux épaulements (29, 31) ou analogues qui sont sous l'influence d'un accouplement à vis de pression (32), un des épaulements (29) pouvant être déplacé vers l'autre épaulement (31) au moyen d'un levier (25) agencé pour être actionné par le moyen de commande (M) par l'intermédiaire d'une tringle tournante (23).

6. Outil selon la revendication 1, **caractérisé en ce que** le moyen de serrage comprend un boîtier de palier (45) qui reçoit ledit arbre et renferme un patin de frein (47) sur lequel une tringle tournante (42) agit pour verrouiller l'arbre dans le boîtier de palier, le patin de frein étant soumis à l'action d'un moyen élastique (48).

7. Outil selon la revendication 5, **caractérisé en ce que** la caractéristique élastique du moyen élastique (48) peut être réglée au moyen d'un manchon (44) qui est vissé dans le boîtier de palier (45) et qui possède une ouverture traversante filetée (43) à travers laquelle la tringle tournante (42) s'étend, cette tringle butant contre le patin de frein (47).

8. Outil selon la revendication 4, **caractérisé en ce que** le moyen de serrage comprend une bague de serrage (57) entourant l'arbre et ayant deux épaulements (55, 56) qui sont partiellement entourés par un patin de serrage (54) en forme de U qui possède une branche (52) munie d'une ouverture traversante (51) à travers laquelle une tringle tournante filetée (50) est insérée, l'ouverture étant coaxiale à une ouverture traversante (59, 60) ménagée dans chaque épaulement (55, 56) et recevant une vis de pression (60), agencée pour être influencée par l'autre branche (53), l'extrémité de la vis (60) butant normalement contre l'extrémité de la tringle tournante (50).
